# EUROPEAN PATENT APPLICATION

(11) **EP 4 772 563 A1**
(43) Date of publication of application: **08.07.2026**
(21) Application number: 24859312.1
(22) Date of filing: 01.08.2024
(51) Int. Cl.: C08J 7/04, B05D 7/00, B05D 7/24, B32B 5/00, C08K 7/02, C08L 1/00, C08L 23/00, C08L 101/00, C09D 201/06

(54) **COATED COMPOSITE-RESIN MOLDED OBJECT**

(30) Priority: 31.08.2023 JP 2023140918
(71) Applicant: Panasonic Intellectual Property Management Co., Ltd., Kadoma-shi, Osaka 571-0057 (JP)
(72) Inventor: HAMABE, Masashi, Kadoma-shi, Osaka 571-0057 (JP); IMANISHI, Masayoshi, Kadoma-shi, Osaka 571-0057 (JP); NAGINO, Toshifumi, Kadoma-shi, Osaka 571-0057 (JP); NISHINO, Shouma, Kadoma-shi, Osaka 571-0057 (JP)
(74) Representative: Novagraaf International SA
(86) International application number: PCT/JP2024/027467
(87) International publication number: WO 2025/047270

(57) **Abstract**

A coated composite resin molded article includes: a composite resin molded article containing a base resin and a fibrous filler; and a coating film formed on a surface of the composite resin molded article, wherein the coating film has a hydrophilic diol structure, the fibrous filler is exposed on the surface of the composite resin molded article, and an air layer is provided at a boundary between the fibrous filler exposed on the surface of the composite resin molded article and the composite resin molded article.

## Description

### TECHNICAL FIELD

The present disclosure relates to a coated composite resin molded article in which a coating film is coated on a surface of a composite resin molded article, the coated composite resin molded article being capable of enhancing adhesion between the composite resin molded article and the coating film.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of that of metal or ceramics. Therefore, general-purpose plastics are often used as materials of various daily commodities such as bags, various packaging, various containers, and sheets, and as materials for industrial components such as automobile components and electrical components, daily necessities, and miscellaneous goods.

However, general-purpose plastics have disadvantages such as insufficient mechanical strength. Therefore, general-purpose plastics do not have sufficient properties required for materials used for various industrial products including machine products such as automobiles and electric/electronic/information products, and the application range thereof is currently limited.

On the other hand, so-called "engineering plastics" such as polycarbonate, fluororesin, and acrylic resin are excellent in mechanical properties, and are used for various industrial products including machine products such as automobiles, and electric/electronic/information products. However, engineering plastics have problems of being expensive, difficulties in monomer recycle, and imposing a large environmental load.

Therefore, there has been a demand for greatly improving the material properties (mechanical strength and the like) of general-purpose plastics. As a known technique, for the purpose of reinforcing a general-purpose plastic, fibrous fillers such as natural fibers, glass fibers, and carbon fibers are dispersed in a general-purpose plastic resin to enhance the mechanical strength of the general-purpose plastic. In addition, also as a known technique, particulate fillers, including an inorganic powder such as talc or silica, or a cellulose-based powder such as pulp powder, waste paper powder, or wood chips, are dispersed in a general-purpose plastic resin to enhance the mechanical strength of the general-purpose plastic. Among them, organic fibrous fillers such as cellulose have attracted attention as reinforcing fibers because they are inexpensive and excellent in environmental properties at the time of disposal.

When a fiber-reinforced resin is to be used as exterior members of machine products such as automobiles and various industrial products including electric/electronic/information products, coating or film bonding may be performed in order to suppress deterioration due to moisture absorption by fibers and to make surface properties such as unevenness due to fibers uniform. In order to utilize a fiber-reinforced resin as an exterior member, strong adhesiveness is required for coating the surface of the fiber-reinforced resin and bonding the film.

In order to improve the appearance characteristics to a molded article, studies have been conducted, and in PTL 1, in order to improve the appearance characteristics, a chlorinated polyolefin resin and a hydroxyl group-containing vinyl copolymer are added to a base coat to adjust the material and composition of the base coat layer, thereby enhancing the adhesiveness to the molded article.

### Citation List

### Patent Literature

PTL 1: Unexamined Japanese Patent Publication No. 2000-518

### SUMMARY OF THE INVENTION

However, in PTL 1, a base coat is used for improving adhesiveness to a polyolefin molded article, but since the base coat has weak rigidity, there is a problem that the rigidity of the entire molded article including the base coat deteriorates. In addition, applying the base coat increases the number of materials and the number of processes, leading to a problem of increased cost. In addition, in the case of coating on a resin such as polyolefin, an oil-based coating material is used to secure the appearance characteristics, but it is preferable to use an aqueous coating material from the viewpoint of discharging VOC. However, the application of the aqueous coating material onto the resin has a problem that the surface properties deteriorate due to repellency or the like.

The present disclosure has been made to solve the above conventional problems, and an object of the present disclosure is to provide a coated composite resin molded article having high appearance characteristics without a base coat or a primer layer and having strong adhesion even in the case of coating an aqueous coating material onto a resin.

In order to achieve the above object, a coated composite resin molded article according to the present disclosure includes: a composite resin molded article containing a base resin and a fibrous filler; and a coating film formed on a surface of the composite resin molded article, wherein the coating film has a hydrophilic diol structure, the fibrous filler is exposed on the surface of the composite resin molded article, and an air layer is provided at a boundary between the fibrous filler exposed on the surface of the composite resin molded article and the composite resin molded article.

The coated composite resin molded article according to the present disclosure can achieve high appearance characteristics and strong adhesion.

### BRIEF DESCRIPTION OF THE DRAWINGS

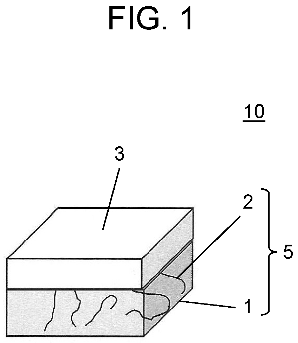

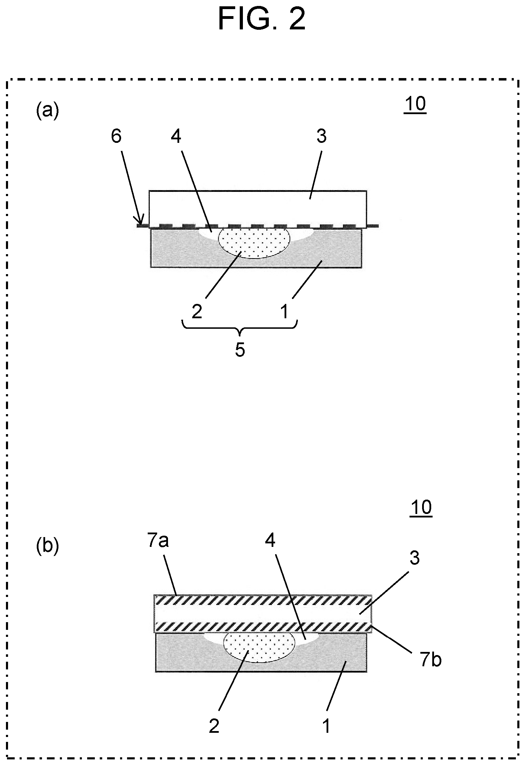

Fig. 1 is a schematic cross-sectional view illustrating the cross-sectional structure of a coated composite resin molded article according to the first exemplary embodiment.
Part (a) of Fig. 2 is a schematic cross-sectional view illustrating a cross-sectional structure of an interface between a coating film and a composite resin molded article of the coated composite resin molded article according to the first exemplary embodiment, and part (b) of Fig. 2 is a schematic view illustrating that curing of coating film 3 occurs from the interface.
Fig. 3 is an electron microscope image illustrating a defibrated state of the end portion of the fibrous filler according to the first exemplary embodiment.
Fig. 4 is a flowchart of a method for producing a composite resin composition according to the first exemplary embodiment; and a method for producing a coated composite resin molded article.
Fig. 5 is Table 1, showing measurement results in each of Examples 1 to 6 and Comparative Examples 1 to 5.

### DESCRIPTION OF EMBODIMENT

A coated composite resin molded article according to a first aspect includes: a composite resin molded article containing a base resin and a fibrous filler; and a coating film formed on a surface of the composite resin molded article, wherein the coating film has a hydrophilic diol structure, the fibrous filler is exposed on the surface of the composite resin molded article, and an air layer is provided at a boundary between the fibrous filler exposed on the surface of the composite resin molded article and the composite resin molded article.

In the coated composite resin molded article according to a second aspect, in the first aspect, when a volume of a recess from a virtual surface that is an extension of the surface of the composite resin molded article is defined as a volume of an air layer, the volume of the air layer may be 1% or more and 50% or less of a volume of an adjacent fibrous filler.

In the coated composite resin molded article according to a third aspect, in the first or second aspect, a content of the fibrous filler in the composite resin molded article is in a range of 5 wt% to 85 wt%, the fibrous filler has a hydroxyl group, and an adhesive force between the fibrous filler and the coating film may be stronger than an adhesive force between the surface of the composite resin molded article and the coating film.

In the coated composite resin molded article according to a fourth aspect, in any one of the first to third aspects, the fibrous filler may be partially exposed from the surface of the composite resin molded article.

In the coated composite resin molded article according to a fifth aspect, in any one of the first to fourth aspects, the fibrous filler in the composite resin molded article may be defibrated only at an end portion of the fibrous filler.

In the coated composite resin molded article according to a sixth aspect, the fibrous filler may be a fiber including a natural fiber including cellulose.

In the coated composite resin molded article according to a seventh aspect, in any one of the first to sixth aspects, the resin may be an olefin resin.

Hereinafter, a coated composite resin molded article according to an exemplary embodiment will be described with reference to the drawings. In the following description, the same components are denoted by the same reference marks, and the description thereof is appropriately omitted.

### (First exemplary embodiment)

Fig. 1 is a schematic cross-sectional view illustrating the cross-sectional structure of coated composite resin molded article 10 according to the first exemplary embodiment.

Coated composite resin molded article 10 according to the first exemplary embodiment of the present disclosure includes composite resin molded article 5 containing base resin 1 and fibrous filler 2, and coating film 3 formed on a surface of the composite resin molded article 5. Composite resin molded article 5 as a base material is formed of a melt-kneaded product containing a base resin, a fibrous filler, and a dispersant. In the composite resin molded article, as illustrated in the schematic cross-sectional view of Fig. 1, fibrous filler 2 is dispersed in base resin 1. Coating film 3 has a hydrophilic diol structure. Fibrous filler 2 is exposed on the surface of composite resin molded article 5, and air layer 4 is provided at the boundary between fibrous filler 2 exposed on the surface of composite resin molded article 5 and composite resin molded article 5. Coating film 3 is formed by the applied coating film.

According to this coated composite resin molded article, high appearance characteristics and strong adhesion can be realized.

When the volume of a recess from virtual surface 6 that is an extension of the surface of composite resin molded article 5 is defined as the volume of air layer 4, the volume of air layer 4 may be 1% or more and 50% or less of the volume of adjacent fibrous filler 2. Virtual surface 6 substantially matches with the lower surface of coating film 3. Therefore, air layer 4 means a space between the recessed surface of composite resin molded article 5 and lower surface of coating film 3.

Hereinafter, members constituting coated composite resin molded article 10 will be described.

### <Composite resin molded article>

Composite resin molded article 5 is a molded article of a composite resin composition containing base resin 1, fibrous filler 2, and a dispersant as an optional element.

### <Base resin>

In the first exemplary embodiment, base resin 1 is preferably a thermoplastic resin in order to ensure good moldability. Examples of the thermoplastic resin include olefin-based resins (including cyclic olefin-based resins) such as polyethylene or polypropylene, styrene-based resins, (meth) acrylic resins, organic acid vinyl ester-based resins or derivatives thereof, vinyl ether-based resins, halogen-containing resins, polycarbonate-based resins, polyester-based resins, polyamide-based resins, thermoplastic polyurethane resins, polysulfone-based resins (such as polyethersulfone and polysulfone), polyphenylene ether-based resins (such as polymers of 2,6-xylenol), cellulose derivatives (such as cellulose esters, cellulose carbamates, and cellulose ethers), lignin resins, modified lignin resins, silicone resins (such as polydimethylsiloxane and polymethylphenylsiloxane), rubbers or elastomers (such as diene rubbers including polybutadiene and polyisoprene, styrene-butadiene copolymers, acrylonitrile-butadiene copolymers, acrylic rubbers, urethane rubbers, and silicone rubbers), and engineering plastics. The resin may be petroleum-derived, plant-derived, or microorganism-derived. In addition, the resin may be a recycled resin obtained by reprocessing a resin molded once, and examples of the recycling method include methods such as material recycling and chemical recycling. The resin may be used alone or in combination of two or more thereof. In addition, the resin may have decomposability by microorganisms, water, heat, or the like. Note that base resin 1 is not limited to the above materials as long as it has thermoplastic properties.

Among these thermoplastic resins, base resin 1 is preferably an olefin-based resin or a polyamide-based resin having a relatively low melting point. Examples of the olefin-based resin include a homopolymer of an olefin-based monomer, a copolymer of olefin-based monomers, and a copolymer of an olefin-based monomer and another copolymerizable monomer. Examples of the olefin-based monomer include chain olefins (α-C2-20 olefins such as ethylene, propylene, 1-butene, isobutene, 1-pentene, 4-methyl-1-pentene, and 1-octene), and cyclic olefins. These olefin-based monomers may be used alone or in combination of two or more thereof. Among the olefin-based monomers, chain olefins such as ethylene and propylene are preferable. Examples of other copolymerizable monomers include fatty acid vinyl esters such as vinyl acetate and vinyl propionate; (meth) acrylic monomers such as (meth) acrylic acid, alkyl (meth) acrylate, and glycidyl (meth) acrylate; unsaturated dicarboxylic acids or anhydrides thereof such as maleic acid, fumaric acid, and maleic anhydride; vinyl esters of carboxylic acids (for example, vinyl acetate, vinyl propionate, and the like); cyclic olefins such as norbornene and cyclopentadiene; and dienes such as butadiene and isoprene. These copolymerizable monomers may be used alone or in combination of two or more thereof. Specific examples of the olefin-based resin include polyethylene (low density, medium density, high density, or linear low density polyethylene, etc.), polypropylene, and copolymers of chain olefins (particularly α-C2-4 olefins) such as an ethylene-propylene copolymer, and a terpolymer such as ethylene-propylene-butene-1. Examples of the polyamide-based resin, a polymer formed of a large number of monomers bonded through amide bonds, include nylon (polyamide) 6, nylon 11, nylon 12, nylon 66, nylon 610, nylon 612, nylon 1010, nylon 1012, and nylon 6T.

### <Additive>

Next, the additive will be described. The composite resin molded article in the first exemplary embodiment may include an additive for the purpose of improving the adhesiveness between fibrous filler 2 and base resin 1 or the dispersibility of fibrous filler 2 in base resin 1, or the like. Examples of the additive include various titanate-based coupling agents, silane coupling agents, unsaturated carboxylic acids, maleic acid, maleic anhydride, modified polyolefins grafted with an anhydride thereof, fatty acids, fatty acid metal salts, and fatty acid esters. The silane coupling agent is preferably unsaturated hydrocarbon-based or epoxy-based. The surface of the additive may be treated and modified with a thermosetting or thermoplastic polymer component. In the present exemplary embodiment, the additive is preferably a polymer graft-polymerized with a hydrophilic group such as maleic anhydride as described above, and the polymer as the additive is more preferably a resin having the same molecular structure as that of base resin 1. The additive is appropriately selected depending on the combination of base resin 1 and fibrous filler 2, and may not be added in the case of a combination in which no additive is required.

### <Fibrous filler>

Next, fibrous filler 2 will be described. The fibrous filler also includes a particulate filler with a diameter and a fiber length substantially equal to each other. The particulate filler is basically the same material as fibrous filler 2, and is only different in filler length and/or aspect ratio. Therefore, in the following description, fibrous filler 2 will be described in detail. In the present exemplary embodiment, the composite resin molded article includes fibrous filler 2 (hereinafter, may be simply referred to as "fiber"). In the resin molded article molded by using the composite resin molded article, fibrous filler 2 is used mainly for the purpose of improving mechanical properties and reducing linear expansion coefficient to improve dimensional stability. For this purpose, fibrous filler 2 preferably has a higher elastic modulus than base resin 1. Specific examples thereof include carbon fibers, carbon nanotubes, pulp, cellulose, cellulose nanofibers, lignocellulose, lignocellulose nanofibers, basic magnesium sulfate fibers (magnesium oxysulfate fibers), potassium titanate fibers, aluminum borate fibers, calcium silicate fibers, calcium carbonate fibers, silicon carbide fibers, wollastonite, xonotlite, various metal fibers, natural fibers such as cotton, silk, wool, and hemp, jute fibers, regenerated fibers such as rayon and cupra, semisynthetic fibers such as acetate and promix, synthetic fibers such as polyester, polyacrylonitrile, polyamide, aramid, and polyolefin, and modified fibers obtained by chemically modifying the surfaces and terminals thereof. Fibrous filler 2 may be needle-like instead of fibrous, and may be wood flour or bark taken from Japanese cedar, Japanese cypress, bamboo, reed, or the like, or powder of coffee, wheat, tea leaves, or the like. Among them, carbons and celluloses are particularly preferable from the viewpoint of availability, high elastic modulus, and environmental properties. Furthermore, from the viewpoint of a circulatory society, natural fibers or natural materials such as celluloses and wood flour, and waste materials obtained therefrom are preferable.

The shape of the fibrous filler and the particulate filler will be described. In the case of natural fibers and natural materials, the starting materials of the fibrous filler and the particulate filler are the same, and the particulate filler is pulverized more finely to be particulate. The reference sign L represents a length of the fibrous filler or the particulate filler (hereinafter, may be referred to as "fiber length"), and the reference sign d represents a width of the fibrous filler or the particulate filler (hereinafter, may be referred to as "fiber diameter"). With regard to the fibrous filler and the particulate filler, the elastic modulus is improved when fibers having a large aspect ratio (L/d) are contained in a large amount, that is, when fibrous fillers are contained in a large amount. The fibrous filler preferably has an aspect ratio of more than or equal to 10. However, when fibers having a large aspect ratio are contained in a large amount, entanglement of the fibers increases, and the fluidity and moldability deteriorate. On the other hand, when fibers having a small aspect ratio are contained in a large amount, that is, when particulate fillers are contained in a large amount, the fluidity is improved, there are few fiber aggregates, and the appearance characteristics are good. The particulate filler preferably has an aspect ratio of less than or equal to 2. However, when fibers having a small aspect ratio are contained in a large amount, the elastic modulus decreases. The aspect ratio (L/d) is calculated using the fiber length L excluding the defibrated portion at the end portion.

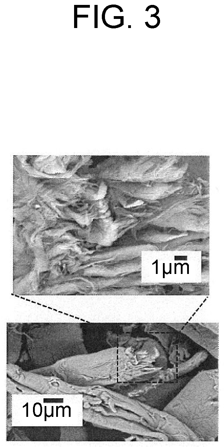

From the viewpoint of mechanical properties, it is preferable that the specific surface area of the fiber is large, that is, the fiber diameter d is small because a larger bonding interface between the fiber and the resin leads to an improved elastic modulus. Fig. 3 is an electron microscope image illustrating a defibrated state of the end portion of the fibrous filler. In order to achieve two purposes of having a small aspect and having a large specific surface area, a structure is most preferable in which a single fiber is partially defibrated at least one end portion, preferably both end portions in the fiber length direction, as illustrated in Fig. 3.

Also from the viewpoint of appearance characteristics, it is preferable to contain a fibrous filler having a structure in which a single fiber is partially defibrated at the end portion in the fiber length direction, as illustrated in Fig. 3. When the fibers are defibrated at only the end portion and the cooling condition during injection molding of the composite resin molded article is made faster than usual, the defibrated portion at the end portion of the fibrous filler easily enters the inside of the molded article, and the central undefibrated portion of the fibrous filler is easily exposed. Such a structure increases the wettability of the coating material during coating.

Part (a) of Fig. 2 is a schematic cross-sectional view illustrating a cross-sectional structure of an interface between coating film 3 and composite resin molded article 5 of coated composite resin molded article 10 according to the first exemplary embodiment, and part (b) of Fig. 2 is a schematic view illustrating that curing of coating film 3 occurs from the interface.

The resin shrinks slightly, and as illustrated in part (a) of Fig. 2, air layer 4 can be provided at the boundary between fibrous filler 2 exposed on the surface of the composite resin molded article and composite resin molded article 5. In the case of a coating film accompanied by a curing reaction by oxygen or the like, the coating film usually shrinks during drying after coating. The shrinkage in the vicinity of the interface causes the bonding point between coating film 3 and composite resin molded article 5 as a base material to be released, resulting in deterioration of the adhesive force. On the other hand, in coated composite resin molded article 10 according to the first exemplary embodiment, air layer 4 is provided at the interface between coating film 3 and composite resin molded article 5 as described above. As illustrated in part (b) of Fig. 2, curing starts from the coating film interface, and cured portions 7a and 7b spread inward from the interface. Such a configuration suppresses shrinkage in the vicinity of the interface, and also prevents release of the bonding point between coating film 3 and composite resin molded article 5 as a base material and deterioration of the adhesive force, thus improving the appearance characteristics.

In air layer 4, when the shrinkage ratio of base resin 1 is large, fibers are not substantially shrunk, so that the volume of air layer 4 increases. Air layer 4 can also be enlarged by molding the composite resin molded article 5 as a base material by foaming. However, when the air layer is large, the coating film becomes uneven due to generation of voids in the coating film. As a definition of the air layer, an area recessed from the surface of the composite resin molded article is defined as an area of the air layer. The volume of the air layer per area is preferably 1% or more and 50% or less of the volume of the adjacent fibrous filler. In addition, in order to expose the fibrous filler on the surface, the weight concentration of the fibrous filler is preferably 5 wt% or more, and if it is too large, heat is generated during molding. Therefore, the weight concentration is preferably 85 wt% or less, and more preferably 15 wt% or more and 70 wt% or less from the viewpoint of molding.

As described above, since the central undefibrated portion of the fibrous filler is exposed, the appearance characteristics of the coating film accompanied by the curing reaction are improved. Furthermore, since the adhesive force between the fibrous filler having a hydroxyl group and the coating film is stronger than the adhesive force between the surface of the composite resin molded article and the coating film, the bonding point is further hardly released to prevent deterioration of the adhesive force, thereby improving the appearance characteristics.

Next, the characteristics of fibrous filler 2 will be described. The types of base resin 1 and fibrous filler 2 are as described above, but when fibrous filler 2 are too soft, that is, have a small elastic modulus with respect to base resin 1, the composite resin composition has a small elastic modulus as a whole, resulting in a decrease in strength. On the other hand, when fibrous filler 2 is too hard, that is, has a large elastic modulus, with respect to base resin 1, shock waves generated at the time of impact are not propagated, and the shock waves are absorbed at the interface between base resin 1 and fibrous filler 2, so that cracks and crazes are likely to occur in the vicinity of the interface, and as a result, impact strength is reduced. Therefore, as for the relationship between the elastic modulus of base resin 1 and the elastic modulus of fibrous filler 2, the elastic modulus of fibrous filler 2 is higher, and the difference is preferably as small as possible. The optimum relationship is calculated from simulation results, and the elastic modulus difference between base resin 1 and fibrous filler 2 is preferably within 20 GPa.

These fibrous fillers 2 are almost all hydrophilic except for petroleum-derived artificial fibers. In particular, the above fibers of celluloses have many hydroxyl groups in the molecule and are hydrophilic. When these hydrophilic fillers are combined with a resin, the hydrophilic fillers are generally hydrophobized because the resin is hydrophobic, but it is preferable that the hydrophilic fillers are not hydrophobized in advance for the purpose of improving the appearance characteristics. Since the hydrophilic fillers are not hydrophobized in advance, the hydrophilic groups of the fibers tend to remain, and the fibers are present in the vicinity of the surface of the molded article, thereby improving the appearance characteristics.

As described above, for the purpose of improving adhesiveness to base resin 1 or dispersibility in the composite resin composition, fibrous filler 2 used may be partially surface-treated with various titanate-based coupling agents, silane coupling agents, unsaturated carboxylic acids, maleic acid, maleic anhydride, modified polyolefins grafted with an anhydride thereof, fatty acids, fatty acid metal salts, fatty acid esters, or the like. Alternatively, fibrous filler 2 may be partially surface-treated with a thermosetting or thermoplastic polymer component. By the above treatment method, it is possible to control the exposed portion of the fibers, and by surface-treating the fiber surface in advance, the portion to be hydrophobized is only the outer surface of the fiber, and the fiber is defibrated in the composite resin. However, since the inside of the defibrated fiber is hydrophilic, the defibrated end portion of the fiber in the molded article has more hydrophilicity in the final molded article. As a result, the defibrated end portion is exposed on the surface of the molded article. On the other hand, when the fibers are not hydrophobized in advance and a compatibilizer such as maleic anhydride is added to the resin and kneaded, the resin having a hydrophilic group enters the defibrated portion, the defibrated portion at the end portion is also compatible with the resin similarly to the central portion, and the central portion can be thus exposed by accelerating cooling during molding. In the present disclosure, it has been confirmed that the air layer is more likely to be formed when the fiber central portion is exposed, and thus a method of adding a compatibilizer to the resin without subjecting the fiber to hydrophobic treatment in advance is adopted.

In addition, by using fibers that are not hydrophobized in advance, the amount of hydroxyl groups present on the surface of the molded article is larger than that of the base resin. As a result, the contact angle of the molded article with respect to the coating material used for coating is smaller than that of the base resin not containing fibers, so that the coating material easily permeates the molded article. By causing a curing reaction from the permeated portion, the bonding point is further hardly released, and the adhesive force does not deteriorate, thus making it possible to improve the appearance characteristics.

### <Coating film>

As illustrated in Fig. 1, coating film 3 is provided on the surface of composite resin molded article 5, and constitutes coated composite resin molded article 10 together with composite resin molded article 5. Coating film 3 is formed of a coating material applied to the surface of composite resin molded article 5.

The coating material for forming the coating film provided on the surface of the composite resin molded article will be described. As the coating material, for example, a coating material having a diol structure such as lacquer, urethane, or urethane of a thinner solvent is preferable. The viscosity of the coating material is preferably within the range from 0.01 Pa•s to 1000 Pa•s inclusive. The coating method was a general coating method such as a comma coater, a dip coater, a die coater, or an applicator.

### <Method for producing coated composite resin molded article>

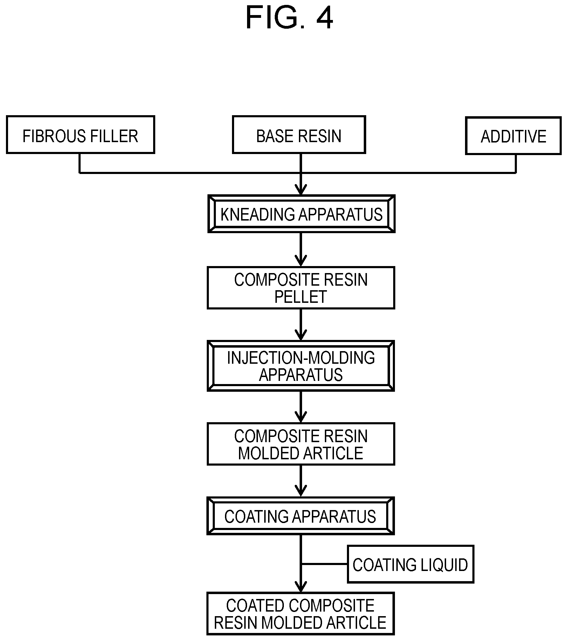

Next, a method for producing a coated composite resin molded article will be described. Fig. 4 is a flowchart of a method for producing a composite resin composition according to the first exemplary embodiment; and a method for producing a coated composite resin molded article.
(1) First, a base resin, a fibrous filler, and as necessary, an additive are charged into a melt-kneading apparatus, and the charged materials are melt-kneaded in the apparatus. As a result, the base resin is melted, and the fibrous filler and the additive are dispersed in the molten base resin. At the same time, the shearing action of the apparatus promotes defibration of aggregates of fibrous fillers, and the fibrous fillers can be finely dispersed in the base resin.

Conventionally, as the fibrous filler, those obtained by preliminary defibrating fibers through a pretreatment such as wet dispersion have been used. However, when the fibrous filler is preliminary defibrated in a solvent used in wet dispersion, the fibrous filler is more easily defibrated than the case of being defibrated in the molten base resin, so that it is difficult to defibrate the fibrous filler at only the end portion, and the entire fibrous filler is defibrated. Further, there is a problem that the number of steps increases and productivity deteriorates by combining the pretreatment.

On the other hand, in the method for producing a composite resin composition according to the first exemplary embodiment, a melt-kneading treatment (all-dry method) is performed together with the base resin, the dispersant, and the like without performing the pretreatment by wet dispersion for the purpose of defibrillation treatment and modification treatment of the fibrous filler. Since the fibrous filler is not subjected to wet dispersion in the method, the fibrous filler can be partially defibrated only in the end portion as described above. In addition, the method needs fewer steps and therefore can improve productivity.

In order to prepare the fiber of the embodiment of the present invention by the all-dry method, it is preferable to apply high shear stress during kneading. Specific examples of the kneading means include a single-screw kneader, a twin-screw kneader, a roll kneader, and a Banbury mixer. From the viewpoint of easy application of high shear and high mass productivity, a continuous twin-screw kneader and a continuous roll kneader are particularly preferable. A kneading method other than the above may be used as long as high shear stress can be applied.
(2) The composite resin composition extruded from the melt-kneading apparatus is prepared in the form of a pellet through a cutting process such as a pelletizer. Examples of the pelletization method include an air hot cut method, an underwater hot cut method, a strand cut method, and the like, as a method of performing pelletization immediately after resin melting, and a pulverization method in which a molded article or a sheet is once molded and then pulverized and cut.
(3) Next, by injection-molding the pellets, an injection-molded article as a composite resin molded article can be prepared. As described above, when cooling is performed at a speed higher than usual during injection molding, the central undefibrated portion of the fibrous filler is easily exposed. This makes it possible to provide an injection-molded article having improved appearance characteristics and adhesion to the coating film.

Hereinafter, examples and comparative examples in experiments performed by the inventors will be described.

### (Example 1)

A pulp-dispersed polypropylene coated composite resin molded article was produced by the following production method.

Polypropylene (trade name: J108M, manufactured by Prime Polymer Co., Ltd.) as a base resin, cotton-like softwood pulp (trade name: NBKP Celgar, manufactured by Mitsubishi Paper Mills Ltd.) as a fibrous filler, and maleic anhydride (trade name: UMEX, manufactured by Sanyo Chemical Industries, Ltd.) as a dispersant were weighed at a weight ratio of 42 : 55 : 3, and dry-blended. Then, the dry blend was melt-kneaded with a twin-screw kneader (KRC kneader, manufactured by Kurimoto, Ltd.), and thus the pulp was dispersed in the polypropylene. The shearing force can be changed by changing the configuration and/or shape of the screw of the twin-screw kneader. In Example 1, the middle-shear type specification was adopted. The resin melt was hot-cut to prepare pulp-dispersed polypropylene pellets.

A test piece of the composite resin molded article was prepared using the prepared pulp-dispersed polypropylene pellets by an injection molding machine (180AD, manufactured by The Japan Steel Works, Ltd.). The preparation conditions of the test piece were a resin temperature of 190°C, a mold temperature of 20°C, an injection speed of 90 mm/s, and a holding pressure of 100 MPa, and the cooling rate was increased by lowering the mold temperature to be lower than usual. The pellets were bit by the screw of the molding machine via the hopper, and the biting performance at that time was measured as the pellet decrease amount per hour, and it was confirmed that the biting performance was constant. The shape of the test piece was changed according to the evaluation items described below, a dumbbell having a size of No. 1 was prepared for measuring the elastic modulus, and a flat plate having a 60 mm square and a thickness of 1.2 mm was prepared for the appearance characteristics test. The obtained test piece of the pulp-dispersed polypropylene composite resin molded article was evaluated by the following method.

### (Presence or absence of fiber exposure, ratio of exposure, and in-plane uniformity of exposed portion)

In the obtained pulp-dispersed polypropylene composite resin molded article, the form of the fibers exposed to the surface and the air layer present in the vicinity of the fibers were observed by X-ray CT. An area recessed from the surface of the composite resin molded article was defined as an area of the air layer, and the volume of the air layer per area observed by X-ray CT was about 20% to 40% of the volume of the adjacent fiber.

### (Length ratio of fiber defibrated site)

The obtained composite resin molded article was immersed in a xylene solvent to dissolve the polypropylene, and the shape of the remaining pulp fibers was observed by SEM. A defibrated site was observed at the end portion in the fiber length direction, and the defibrated site was about 20% to 30% of the total fiber length.

X-ray CT measurement of the composite resin molded article was performed. As a result, the distribution state of fibers in the depth direction was found, and as a result of measuring several representative fibers, a fiber exposed portion was present on the surface, and a large number of fiber central portions were exposed.

### (Elastic modulus of composite resin molded article)

A tensile test was performed using the obtained No. 1 dumbbell-shaped test piece.

The elastic modulus of the test piece was 3.5 GPa.

### (Coating of coating film)

The fiber composite resin molded article obtained as described above was used as a base material, and the surface thereof was coated. Coating was performed using, as a coating material, a lacquer which uses environmentally friendly water as a solvent, the lacquer having a diol structure having two or more hydroxyl groups, for example, urushiol or Racol as a component, and proceeding its curing reaction by oxygen in the air. The lacquer is 100% of plant origin, and environmentally friendly.

### (Coating adhesion and appearance characteristics)

The obtained composite resin molded article was coated, and coating adhesion was evaluated by a cross-cut peeling test (JIS K 5600).

The obtained coated composite resin molded article was not peeled off.

In addition, the appearance characteristics were determined from the appearance of the coated composite resin molded article. A sample having a uniform surface was rated "⊚", a sample having a surface slightly uneven at a level of several tens of µm due to partial fiber exposure or the like was rated "∘", a sample having a surface uneven at a level of several mm or more due to a recess of the air layer or the like was rated "×", and a sample having an intermediate uneven at a level of several hundreds of µm was rated "△".

The coated composite resin molded article obtained in Example 1 had a uniform surface, and the evaluation was ⊚.

### (Example 2)

In Example 2, the coating material was changed from lacquer to urethane. The pulp-dispersed polypropylene pellet and the coated composite resin molded article were prepared in the same material conditions and process conditions as in Example 1 except for the above conditions. The evaluation was performed in the same manner as in Example 1.

### (Example 3)

In Example 3, the concentration of the fibrous filler was changed to 70 wt%. The pulp-dispersed polypropylene pellet and the coated composite resin molded article were prepared in the same material conditions and process conditions as in Example 1 except for the above conditions. The evaluation was performed in the same manner as in Example 1.

### (Example 4)

In Example 4, the concentration of the fibrous filler was changed to 15 wt%. The pulp-dispersed polypropylene pellet and the coated composite resin molded article were prepared in the same material conditions and process conditions as in Example 1 except for the above conditions. The evaluation was performed in the same manner as in Example 1.

### (Example 5)

In Example 5, the base resin was changed from polypropylene to bio-polyethylene (BioPE_SHA7260 manufactured by Braskem S.A.). The pulp-dispersed resin pellet and the coated composite resin molded article were prepared in the same material conditions and process conditions as in Example 1 except for the above conditions. The evaluation was performed in the same manner as in Example 1.

### (Example 6)

In Example 6, the base resin was changed from polypropylene to polyamide (UBE NYLON 1013B manufactured by UBE Corporation). The pulp-dispersed resin pellet and the coated composite resin molded article were prepared in the same material conditions and process conditions as in Example 1 except for the above conditions. The evaluation was performed in the same manner as in Example 1.

### (Example 7)

In Example 7, the pulp-dispersed polypropylene pellet and the composite resin molded article were prepared in the same material conditions and process conditions as in Example 1, and then only the resin on the surface was slightly removed by etching with a solvent to increase the volume of the air layer of the composite resin molded article, and then coating was performed. The evaluation was performed in the same manner as in Example 1.

### (Comparative Example 1)

In Comparative Example 1, the pulp-dispersed polypropylene pellet and the molded article were prepared in the same material conditions and process conditions as in Example 1, and then, the surface of the composite resin molded article was mirror-polished to eliminate the air layer, and coating was performed. The evaluation was performed in the same manner as in Example 1.

### (Comparative Example 2)

In Example 8, coating was performed using, as the coating material, a urethane-based polymer which does not undergo curing reaction but undergoes only a drying reaction of NMP (N-methyl-2-pyrrolidone) as a solvent. The evaluation was performed in the same manner as in Example 1.

### (Example 8)

In Example 8, the pulp-dispersed polypropylene pellet and the composite resin molded article were prepared in the same material conditions and process conditions as in Example 2, and coating was performed using a solvent of a urethane coating material as a thinner. The evaluation was performed in the same manner as in Example 1.

### (Example 9)

In Example 9, the screw configuration was changed to a conveying screw substantially free from shear. The pulp-dispersed polypropylene pellet and the coated composite resin molded article were prepared in the same material conditions and process conditions as in Example 1 except for the above conditions. The evaluation was performed in the same manner as in Example 1.

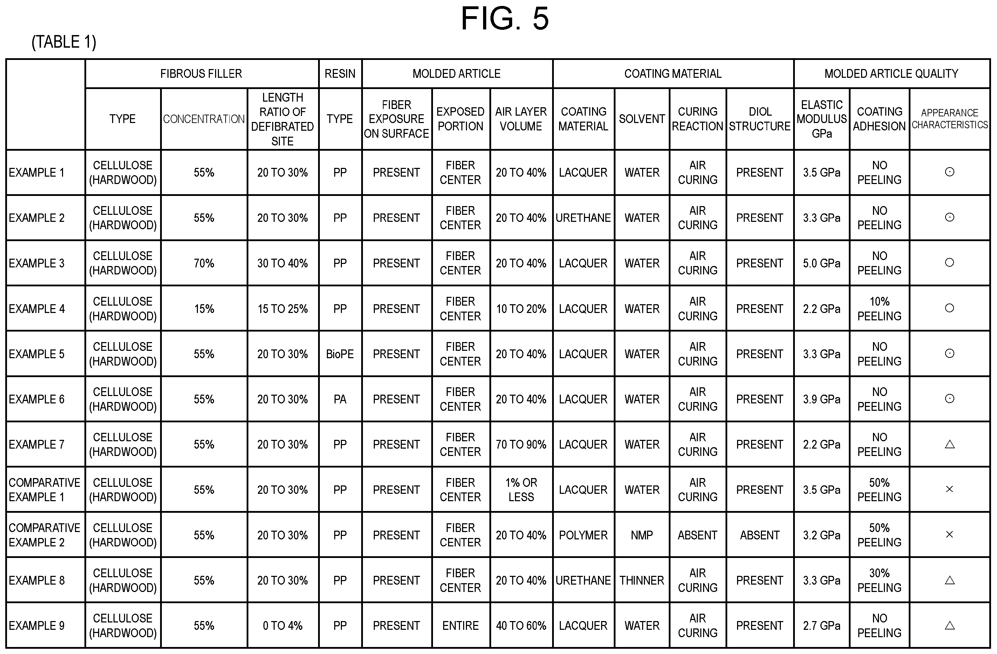

Fig. 5 is Table 1, showing measurement results in each of Examples 1 to 9 and Comparative Examples 1 to 2.

As is apparent from Table 1 in Fig. 5, in Example 2 in which the coating material was changed to urethane, the elastic modulus slightly decreased, but the elastic modulus was almost the same as that in Example 1 because of having a water solvent, air curing, and a diol structure. In Example 3 in which the filler concentration was increased to 70 wt%, since the resin thickened during kneading, the number of defibrated sites increased, the amount of fibers exposed to the surface decreased, and the appearance characteristics slightly deteriorated. On the other hand, in Example 4 in which the filler concentration was reduced to 15%, the viscosity of the resin during kneading decreased, the number of defibrated sites decreased, and the volume of the air layer slightly decreased. Therefore, the adhesion of the coating film slightly deteriorated, and the appearance characteristics also deteriorated. In Examples 5 and 6 in which the resin type was changed, the elastic modulus as a molded article slightly changed due to the change in the resin type, but the other results were almost the same as those in Example 1. In all of Examples 2 to 6, there were no problems in the elastic modulus and appearance characteristics as in Example 1, and it was confirmed that the coating material adhesion and appearance characteristics could be improved if the following conditions were satisfied: the filler concentration was 15 wt% to 70 wt%, the ratio of defibrated sites was 5% to 50%, fibers were exposed on the surface of the molded article, the volume of the air layer near the exposed fibers fell within the range of 50% or less of the fiber volume, the base resin was a thermoplastic resin, and the coating material had an aqueous diol structure.

In Example 7 in which the volume of the air layer of the molded article was increased and then coating was performed, the coating material became uneven due to the recess of the air layer, and the surface properties were poor, resulting in slightly poor appearance characteristics.

In Comparative Example 1 in which coating was performed after the volume of the air layer was set to 1% or less, the coating material shrunk in the in-plane direction during curing, and the adhesion point of the coating film was peeled off, resulting in poor coating adhesion. As a result, about 50% was peeled off in the adhesion evaluation by the cross-cut peeling test, resulting in poor appearance characteristics.

In Comparative Example 2 in which a polymer coating material was used for the coating material, since there was no curing reaction and there was no diol structure compatible with cellulose, coating adhesion was poor, the coating material shrunk in the in-plane direction during curing, the adhesion point of the coating film was peeled off, resulting in poor coating adhesion. As a result, about 50% was peeled off in the adhesion evaluation by the cross-cut test, resulting in poor appearance characteristics.

In Example 8 in which coating was performed using a thinner as a solvent, in addition to being environmentally unfriendly, the solvent was not compatible with cellulose, and defects such as repellency occurred during coating, resulting in slightly poor appearance characteristics. The coating adhesion was poor due to repellency.

In Example 9 in which the screw configuration was changed to a conveying screw free from shear so that fibers were not defibrated so much in the molten resin, the length ratio of the defibrated site was 0 to 4%. As a result, the specific surface area of the fiber in the molded article was small, and the elastic modulus was as low as 2.7 GPa. In addition, the entire fiber was exposed on the surface, the coating material was repelled during coating, resulting in slightly poor appearance characteristics.

From the above evaluation, it has been found that when a composite resin molded article is prepared using a resin material in which only the end portion of fibers is defibrated, fibers are exposed on the surface, the air layer is provided in the vicinity thereof, and high elastic modulus can be realized. In addition, it has been found that, by using a coating material which is accompanied by a curing reaction and has a diol structure for coating, and using water as a solvent, it is possible to provide a coated composite resin molded article having good adhesion and good appearance characteristics, and capable of realizing a high elastic modulus without using a primer layer.

### INDUSTRIAL APPLICABILITY

The coated composite resin molded article according to the present disclosure can provide a molded article having mechanical strength superior to that of a conventional general-purpose resin. The coated composite resin molded article according to the present disclosure can improve the properties of the base resin, and thus can be utilized as an alternative to engineering plastics or an alternative to metal materials. Therefore, the manufacturing cost of various industrial products or daily necessities made of engineering plastics or metals can be greatly reduced. Furthermore, the present disclosure can be used for daily necessities, household electric appliance housings, building materials, and automobile members.

### REFERENCE MARKS IN THE DRAWINGS

1: base resin
2: fibrous filler
3: coating film
4: air layer
5: composite resin molded article
6: virtual surface (interface) (lower surface of coating film)
7a, 7b: cured portion
10: coated composite resin molded article

## Claims

1. A coated composite resin molded article comprising:
a composite resin molded article containing a base resin and a fibrous filler; and
a coating film formed on a surface of the composite resin molded article, wherein
the coating film has a hydrophilic diol structure,
the fibrous filler is exposed on the surface of the composite resin molded article, and an air layer is provided at a boundary between the fibrous filler exposed on the surface of the composite resin molded article and the composite resin molded article.

2. The coated composite resin molded article according to Claim 1, wherein when a volume of a recess from a virtual surface that is an extension of the surface of the composite resin molded article is defined as a volume of an air layer, the volume of the air layer is 1% or more and 50% or less of a volume of an adjacent fibrous filler.

3. The coated composite resin molded article according to Claim 1, wherein
a content of the fibrous filler in the composite resin molded article is in a range of 5 wt% to 85 wt%,
the fibrous filler has a hydroxyl group, and
an adhesive force between the fibrous filler and the coating film is stronger than an adhesive force between the surface of the composite resin molded article and the coating film.

4. The coated composite resin molded article according to Claim 1, wherein the fibrous filler is partially exposed from the surface of the composite resin molded article.

5. The coated composite resin molded article according to Claim 1, wherein the fibrous filler in the composite resin molded article is defibrated only at an end portion of the fibrous filler.

6. The coated composite resin molded article according to Claim 1, wherein the fibrous filler is a fiber including a natural fiber such as cellulose.

7. The coated composite resin molded article according to Claim 1, wherein the base resin is an olefin resin.
